Europäisches Patentamt

European Patent Office

Office européen des brevets

(11) Publication number: **0 286 605**
**A2**

(12) **EUROPEAN PATENT APPLICATION**

(21) Application number: **88830134.8**

(22) Date of filing: **30.03.88**

(51) Int. Cl.⁴: **F 16 K 11/08**
**E 03 C 1/042**

(30) Priority: **09.04.87 IT 2136987**

(43) Date of publication of application:
**12.10.88 Bulletin 88/41**

(84) Designated Contracting States:
**BE CH DE ES FR GB GR LI NL**

(71) Applicant: **Battaglia, Marco**
**Corso Garibaldi, 50**
**I-20121 Milano (IT)**

(72) Inventor: **Battaglia, Marco**
**Corso Garibaldi, 50**
**I-20121 Milano (IT)**

(74) Representative: **Cicogna, Franco**
**Ufficio Internazionale Brevetti Dott.Prof. Franco Cicogna**
**Via Visconti di Modrone, 14/A**
**I-20122 Milano (IT)**

(54) **A liquid flow control valve particularly for sanitary fixtures.**

(57) There is disclosed a liquid flow control valve particularly for sanitary fixtures,which comprises a valve outer body to be rigidly fitted to a top surface of the sanitary fixture and a driving member,provided with a gripping knob,rotatably associated with the valve body for opening and closing the valve through a barrel member adapted to alternatively communicate the fluid inlet and outlet ports.

The main feature of the valve is that the barrel member is substantially slanted with respect to the fluid outlet port.

*Fig.2*

EP 0 286 605 A2

## Description

## A LIQUID FLOW CONTROL VALVE PARTICULARLY FOR SANITARY FIXTURES

### BACKGROUND OF THE INVENTION

The present invention relates to a flow control valve which has been specifically designed for operating as a faucet for adjusting the water flow rate in homes and the like.

As is known,presently available faucets or cocks, and,more specifically, the so-called three-hole faucets, that is faucets including three holes two of which are used as water inlets (both for cold and hot water) and the third of which is a water outlet hole,are provided with side holes which are coaxial with respect to the faucet outer body to be firmly associated with a sanitary fixture.

In order to operate such a faucet, the user is compelled to grip the faucet control knob which is a rather uncomfortable operation since,generally,the user is facing the faucet and,accordingly,he/she must rotate the control knob with his/her arm in a substantially horizontal attitude.

### SUMMARY OF THE INVENTION

Accordingly, the task of the present invention is to overcome the above mentioned drawback by providing a fluid flow control valve which may be operated in a very simple way even by old people and children.

Within the scope of that task,a main object of the present invention is to provide a liquid flow control valve,adapted to be easily operated,which may be applied to all of the existing sanitary fixtures without the need for modifying them.

Another object of the present invention is to provide such a liquid flow control valve which is very reliable in operation.

Yet another object of the present invention is to provide such a liquid flow control valve which can be constructed with a comparatively low cost starting from easily available components and materials.

According to one aspect of the present invention the above mentioned task and objects,as well as yet other objects,which will become more apparent hereinafter,are achieved by a liquid flow control valve comprising a valve body to be rigidly coupled under a surface of a sanitary fixture and a rotatable driving member associated with said valve body for closing and opening said liquid flow control valve,by means of a barrel member adapted to communicate a fluid inlet and a fluid outled ports formed through said valve body,characterized in that said barrel member is substantially slanted with respect to said liquid flow outlet port.

### BRIEF DESCRIPTION OF THE DRAWING

Further characteristics and advantages of the flow control valve or faucet according to the present invention will become more apparent hereinafter from the following detailed description of a preferred embodiment thereof,which is illustrated,by way of an indicative but not limitateve example,in the figures of the accompanying drawing,in which:

Figure 1 is an elevation side view,of schematic nature,illustrating the liquid flow control valve according to a preferred embodiment of the present invention; and

Figure 2 is a cross-sectional side elevation view of the liquid flow control valve according to the present invention.

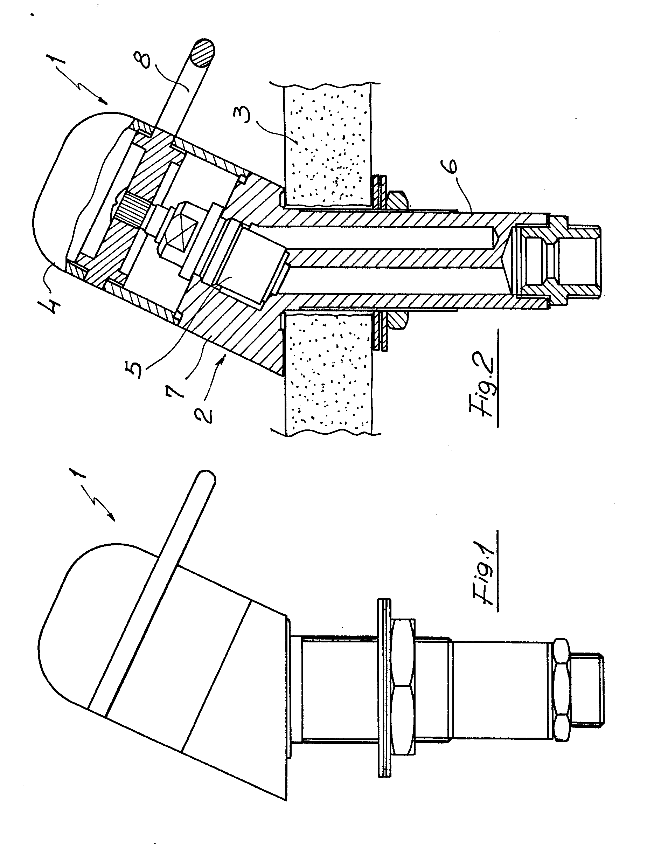

### DESCRIPTION OF THE PREFERRED EMBODIMENT

With reference to the figures of the accompanying drawing,the liquid flow control valve according to the present invention,which has been generally indicated at the reference number 1,comprises an outer body,generally indicated at the reference number 2,which is provided for rigid association with a generic sanitary fixture 3,or any known type,which supports a driving member 4 which is associated with the top of said outer valve body and is adapted to control the opening and closing movement of the valve 1,through a barrel member 5 adapted to alternatively communicate the fluid inlet port with the fluid outlet port.

More specifically the plug bearing barrel member 5,which is arranged with its axis in a slanted attitude,with respect to the fluid outlet port,is partially engaged inside the valve body 2 on the top of a surface of the sanitary fixture 3.

The valve body or side member 2 is provided with a first portion 6,arranged under the top surface of the sanitary fitting 3 and with a substantially perpendicular relatinship thereto,and a portion 7 which is arranged above the top surface of the sanitary fixture 3 and is substantially slanted with respect to said top surface so as to afford the possibility of tilting the driving member 4 with respect to the mentioned top surface of the sanitary fixture.

More specifically said driving member 4 is slanted toward the front position of the sanitary fixture so as to form therewith an angle from substantially 20° to 30° and,in particular,an angle of 25° :in this way the user may easily grip the driving member 4 to open or close the liquid flow control valve.

In this connection,it should be pointed out that said driving member 4 has its rotation or pivoting axis which coincides with the axis of the top portion 7 of the valve body 2 and that the axis of the barrel member substantially coincides with the axis of said driving member and the axis of the mentioned top portion.

A gripping member 8 is suitably assembled on the driving member,which gripping member extends in a substantially radial direction and faces the part thereat said driving member defines said acute angle of 25°,with respect to the top surface of the sanitary fixture.

While the invention has been disclosed and illustrated with reference to a preferred embodiment thereof, it should be apparent that the disclosed embodiment is susceptible to several modifications and variations all of which come within the scope of the appended claims.

## Claims

1- A liquid flow control valve,which has been specifically designed for sanitary fittings,comprising a valve outer body to be rigidly fitted to a sanitary fixture and a driving member rotatably associated with said valve body,for opening and closing said liquid flow control valve,through a barrel member adapted to alternatively communicate the fluid inlet and fluid outlet ports,formed in said valve body, characterized in that said barrel member is substantially slanted with respect to said fluid outlet port.

2- A liquid flow control valve,according to claim 1, characterized in that said barrel member is arranged in said valve body above the top surface of said sanitary fixture.

3- A liquid flow control valve,according to claims 1 and 2,characterized in that said valve body is provided with a first portion arranged under said top surface of said sanitary fixture and substantially perpendicular thereto,and with a further portion,arranged above said top surface of said sanitary fixture and slanted with respect to said top portion.

4- A liquid flow control valve,according to one or more of the preceding claims,characterized in that said barrel member is slanted toward the front portion of said sanitary fixture.

5- A liquid flow control valve according to one or more of the preceding claims,characterized in that said driving member pivoting axis substantially coincides with the axis of the top portion of said valve body.

6- A liquid flow control valve according to one or more of the preceding claims,characterized in that the axis of said barrel member coincides with the axis of said driving member.

7- A liquid flow control valve,according to one or more of the preceding claims,characterized in that from said driving member a gripping member extends in a substantially radial direction from the part thereat said driving member defines an acute angle with respect to said top surface of said sanitary fixture.

8- A liquid flow control valve,according to one or more of the preceding claims,characterized in that said acute angle is included between 20° and 30°.

9- A liquid flow control valve according to one or more of the preceding claims, characterized in that said angle is of 25°.

0286605

Fig.1

Fig.2